# EUROPÄISCHE PATENTSCHRIFT

(11) **EP 1 411 258 B1**
(45) Veröffentlichungstag und Bekanntmachung des Hinweises auf die Patenterteilung: **30.08.2006**
(21) Anmeldenummer: 03022408.3
(22) Anmeldetag: 07.10.2003
(51) Int. Cl.: F16D 23/06, F16D 23/04

(54) **Schiebemuffe**
Sliding sleeve
Manchon coulissant

(30) Priorität: 15.10.2002 DE 10247952
(43) Veröffentlichungstag der Anmeldung: 21.04.2004
(73) Patentinhaber: Schaeffler KG, 91074 Herzogenaurach (DE)
(72) Erfinder: Jansen, Manfred, 91085 Weisendorf (DE); Sassrath, Hans-Gerhardt, 91056 Erlangen (DE); Bössner, Ralf, 91217 Hersbruck (DE); Kalthoff, Ralph, 91054 Erlangen (DE); May, Kristina, 92237 Sulzbach-Rosenberg (DE); Spalthoff, Eberhard, 33615 Bielefeld (DE); Röckelein, Ernst, 96138 Burgebrach (DE); Badum, Thomas, 91315 Höchstadt (DE)

(56) Entgegenhaltungen:
- DE-A- 10 018 093
- DE-A- 10 018 094
- DE-A- 10 021 710
- DE-A- 19 713 304
- DE-A- 19 820 654

## Beschreibung

### Gebiet der Erfindung

Die Erfindung betrifft eine Schiebemuffe mit einer Verzahnung an einem Blechstreifen und mit einer Schaltgabelführung, wobei die Verzahnung mittels eines spanlosen Formgebungsprozesses in den anfangs flach mit einem rechteckigen Querschnitt vorliegenden sowie anschließend ringförmig um eine Rotationsachse der Schiebemuffe gebogenen und dabei an aufeinander zu gebogenen Enden des Blechstreifens verbundenen Blechstreifen eingebracht ist, so dass die Verzahnung radial nach innen weisende sowie in Umfangsrichtung zueinander benachbarte Zähne an dem Blechstreifen aufweist und wobei die Schaltgabelführung mit einer außerhalb der Verzahnung um die Rotationsachse verlaufenden, seitlich in beide Längsrichtungen der Rotationsachse begrenzten sowie radial nach außen offenen Ringnut versehen ist.

### Hintergrund der Erfindung

Eine derartige Schiebemuffe ist in DE 198 20 654 A1 beschrieben. Die Verzahnung der Schiebemuffe ist aus einem Blechstreifen gebildet, der in seinem Ausgangszustand flach mit rechteckigem Querschnitt vorliegt. In den Blechstreifen ist im flachen Zustand das Profil der Verzahnung gewalzt bzw. geprägt. Die Zähne der Verzahnung stehen aus einer flachen Basis des profilierten Blechstreifens hervor. Die Verzahnung weist die bekannten Merkmale einer Verzahnung an Schiebemuffen, wie dachartig angespitzte Zähne, hinterschnittene Zahnflanken, radiale Rastvertiefungen oder Ähnliches auf. Das Profil der Verzahnung ist mit den Rastvertiefungen für Druckstücke, den Dachschrägen und den sich zur Zahnmitte längs der Zähne hin im Querschnitt verjüngenden Zähnen im flachen Zustand in den Blechstreifen eingebracht. Die Zähne der Verzahnung weisen nach dem Biegen radial nach innen auf die Rotationsachse der Schiebemuffe zu. Die nicht mit der Verzahnung profilierte Seite weist radial nach außen, so dass die Basis außen eine oder mehrere durch Abstufungen der Außendurchmesser hervorgerufene im wesentlichen zylindrische Mantelfläche(n) oder durch andere beliebige geometrische Formen bestimme Flächen aufweist, wobei jedoch die Basis in radialer Richtung auch funktionsbedingt mittels Durchgangslöchern durchbrochen oder durch Einformungen in die hohlzylindrische Form unterbrochen sein kann. Dabei ist die Basis nach außen zumindest durch eine Außenmantelfläche begrenzt die den Grund der Ringnut einer Schaltgabelführung bildet. Nach innen ist die Basis durch eine gedachte zylindrische Mantelfläche begrenzt, deren Durchmesser durch den Durchmesser des Fußkreises der Verzahnung vorgegeben ist. Unter Verzahnung und Zähnen sind in der Erfindung alle Arten und Ausführungen von Keilen, Keilprofilen, Klauen, Kerbverzahnungen usw. zu verstehen, die für eine formschlüssige Verbindung zum Übertragen von Drehmomenten geeignet sind.

Der Blechstreifen ist nach dem Profilieren, entlang seiner Längsachse kreisrund gebogen sowie dabei an seinen Schnittkanten zusammengeführt. Die Schnittkanten sind dann aneinander befestigt, so dass ein umfangsseitig geschlossener und belastbarer Ring entsteht. Dazu sind die Enden des Blechstreifens miteinander verschweißt. Die Verbindung der Schnittkanten ist aufgrund der in der Synchronkupplung zu übertragenden Drehmomente hoch belastet. Der Aufwand für das Herstellen einer sicheren Verbindung ist deshalb hoch.

Die Schaltgabelführung ist mit einer um die Rotationsachse verlaufenden und beidseitig längs der Rotationsachse begrenzten Ringnut versehen. Die Ringnut ist nach dem Stand der Technik durch die Flanken von zwei längs der Rotationsachse mit Abstand zueinander sowie parallel zueinander und außen auf der Basis befestigten Lochscheiben begrenzt.

Ein Ziel der Fachwelt ist es, die Getriebe und damit deren Einzelteile mit hoher Lebensdauer zu versehen, so klein wie möglich zu bauen und kostengünstig herzustellen. Mit einer Synchronkupplung und damit mit einer Schiebemuffe sind teils hohe Drehmomente zu übertragen. Die Verzahnung und die Basis sind deshalb robust zu gestalten, so dass das anfangs erwähnte Ziel, die Getriebe so klein wie möglich zu bauen, oftmals nicht in dem Maße verwirklicht werden kann wie es gewünscht ist. Weiterhin ist das Aufsetzen der Scheiben der Schaltgabelführung relativ aufwendig, da der Eingriff der Schaltgabel in die Schaltgabelführung teils hohe Anforderungen an die Genauigkeit in der Ausführung einer Schaltgabelführung und damit an die Genauigkeit der Ausführung der Ringnut stellt.

### Zusammenfassung der Erfindung

Die Aufgabe der Erfindung ist es daher, eine robuste Schiebemuffe mit einer Verzahnung an einem Blechstreifen zu schaffen, die sich insbesondere in der Großserien- und Massenproduktion kostengünstig herstellen lässt.

Diese Aufgabe ist nach dem Gegenstand des kennzeichnenden Teils des Anspruchs 1 dadurch gelöst, dass die Schiebemuffe mit der Schaltgabelführung und mit der Verzahnung einteilig aus dem Blechstreifen gebildet ist. Die Schiebemuffe weist, längs der Rotationsachse geschnitten betrachtet, einen U-förmigen Querschnitt auf. Die Schaltgabelführung besteht dabei aus zwei sich längs der Rotationsachse einander gegenüberliegenden und von der Rotationsachse radial nach außen hervorstehenden Borden an dem Blechstreifen. Die Ringnut ist damit seitlich in beide Längsrichtungen der Rotationsachse durch die einander zugewandten Flanken der Borde begrenzt. Der Grund der Ringnut ist durch die Außenmantelfläche des Blechstreifens mit der Verzahnung oder durch die Außenmantelfläche der Basis der Verzahnung gebildet.

Bis zu dem Zeitpunkt, an dem die Erfindung gemacht wurde, war es der Fachwelt nicht möglich, eine Schiebemuffe mittels Umformen einteilig zusammen mit der Ringnut - Schaltgabelführung herzustellen, da man davon ausging, dass die Ringnut den Formprozessen als ein in Formrichtung liegender Hinterschnitt entgegensteht.

Der Blechstreifen für die Herstellung der Schiebemuffe ist entweder von einer Platine gewonnen oder vorteilhaft von einem endlosen Bandmaterial der Ausgangsbreite und Dicke des im Querschnitt rechteckigen Blechstreifens abgetrennt. Dabei ist der Blechstreifen mit einer Länge abgetrennt, die dem Umfang des ringförmig um die Rotationsachse gebogenen U-Profils entspricht. Das Profil der Verzahnung ist nach dem Zuschneiden des Blechstreifens in den Blechstreifen durch z.B. Prägen, Walzen und Rollieren eingebracht. Beidseitig quer des Blechstreifens, und somit sich längs an die Dachspitzen der Zähne anschließend, verbleibt jeweils ein nicht mit der Verzahnung profilierter Bereich an dem Blechstreifen, der dann als jeweils ein Bord der Schaltgabelführung von der Verzahnung durch Walzen, Rollieren oder Abkanten abgewinkelt ist. Das anfangs flach vorliegende U-Profil ist schließlich ringförmig gebogen.

Die Fertigungs- und Handhabungskosten für die Herstellung einer Schiebemuffe verringern sich, da das Herstellen, das Lagern und schließlich das Fügen von einzelnen Teilen zu einer Schiebemuffe entfällt. Der Materialverschnitt, wie zum Beispiel bei der Herstellung der Scheiben für die Schaltgabelführung an Schiebemuffen nach dem Stand der Technik gibt es nicht. Die einzelnen Verfahrensschritte der Herstellung der Schiebemuffe, wie das Zuschneiden, das Profilieren, das Biegen und das Fügen der Enden und auch die Wärmebehandlungen wie das Anlassen und das Härten sowie die Nachbearbeitung, wie das Kalibrieren, sind vorteilhaft auf wenige Fertigungsanlagen oder in einer Fertigungsstraße zusammengefasst.

Der Blechstreifen ist bevorzugt aus Stahl mit den Werkstoffbezeichnungen C15, 100Cr6 oder 16MnCr5 hergestellt. Alternativ dazu sind alle kaltumformbaren Stähle einsetzbar.

Die Schiebemuffe gemäß Erfindung ist sehr kompakt ausgeführt. Es sind Schiebemuffen mit kleinen Außendurchmessern und hoher Stabilität herstellbar, da die einteilig mit der Verzahnung ausgebildeten Borde die Schiebemuffe versteifen wobei jedoch, verglichen mit dem bisherigen Stand der Technik, kaum oder nur geringfügig mehr radialer Bauraum durch die Schiebemuffe beansprucht ist. Unzulässige Verformungen der Schiebemuffe unter hoher Last sind vermieden, da die Borde die Verzahnung tangential, radial und in Umfangsrichtung stützen und das Widerstandsmoment des Profils erhöhen. Das ist insbesondere der Fall, wenn wie eine Ausgestaltung der Erfindung vorsieht, die Zähne der Verzahnung von einer ringförmigen Basis an dem Blechstreifen abgehen. Die Basis weist die Gestalt eines Hohlzylinders auf. Dabei ist der Hohlzylinder außen zumindest durch eine die Ringnut in ihrem Grund begrenzende Mantelfläche begrenzt. Der Hohlzylinder ist nach innen durch eine gedachte zylindrische Mantelfläche definiert, wobei der Durchmesser der Mantelfläche dem Durchmesser des Fußkreises der Verzahnung entspricht. Die Basis ist vorteilhaft mit einer radialen Wandstärke versehen, deren Maß zumindest gleich der Zahnhöhe der Zähne der Verzahnung ist. Von der Basis gehen die Borde ab.

Die zunächst kalt geformte Schiebemuffe ist ggf. nach dem Verbinden der Enden des Blechstreifens in der Ringnut und an den Stirnseiten durch spanabhebende Verfahren oder durch Kalibrieren nachbearbeitet. Die Borde sind bevorzugt seitlich in die Längsrichtungen der Rotationsachse durch Flanken begrenzt, die durch Umformen oder Nacharbeit erzeugt sowie parallel zueinander ausgerichtet sind. Dabei weisen die Flanken Ringflächen und sich den Ringflächen anschließende konvexe Konturen auf, wobei diese Konturen in den Zahnlücken zwischen den einzelnen Zähne in den Fußkreis der Verzahnung übergehen. Dabei verbindet, in einem durch die Zahnlücke längs der Rotationsachse geführten Schnitt betrachtet, eine durch zumindest einen Radius beschriebene Körperkante der konvexen Kontur, die Ringfläche mit dem Fußkreis der Verzahnung. Der Radius weist vorzugsweise ein Maß auf, das gleich oder größer der Dicke des Blechstreifens in dem noch nicht mit dem Profil der Verzahnung versehenen Ausgangszustand ist.

Die Steifigkeit der Schiebemuffe ist hoch, wenn der Abstand zwischen der die Ringnut begrenzenden Flanke und zwischen der von der Ringnut abgewandten Flanke eines Bordes längs der Rotationsachse mindestens der Hälfte, alternativ 9/10, der Dicke des Blechstreifens in dem noch nicht mit dem Profil der Verzahnung versehenen Ausgangszustand entspricht oder gleich groß der Dicke dieses Ausgangsmateriales ist.

Die anfangs erwähnte Verbindung der aufeinander zugebogenen Enden an den Schnittkanten des Blechstreifens ist tangential oder in Umfangsrichtung zusätzlich durch Schweißverbindungen an den Enden zwischen den Borden unterstützt und somit stabiler. Die Enden des Blechstreifens sind vorzugsweise mittels Fügetechniken durch einen Kraft-Formschluss in einer oder mehrerer sogenannter Schlossverbindung(en) oder mittels Schweißverbindung(en) bzw. mittels Kombinationen dieser Techniken aneinander befestigt. Die Schlossverbindung ist durch das tangentiale bzw. umfangsseitige Einhaken von formschlüssig miteinander korrespondierender Elemente an den Enden des Blechstreifens gebildet (z. B. in der Form einer Schwalbenschwanzverbindung). Diese Verbindungen sind ggf. durch Prägungen oder Verstemmen bzw. durch Schweißen gesichert.

Die Verschleißfestigkeit der Schiebemuffe ist durch Härten oder Nitrocarburieren erhöht. Dabei sind sowohl Verfahren zum Durchhärten als auch zum Einsatzhärten einsetzbar. Die Ringnut ist entweder vor oder nach dem Härten durch spanabhebende Nacharbeit oder Kalibrieren auf Maß gebracht. Die Schiebemuffe innen und auch außen, insbesondere die Ringnut der Schaltgabelführung, ist alternativ durch Hartdrehen nach dem Härten der Führung bzw. der Schiebemuffe bearbeitet.

Die Schiebemuffe ist durch Fügen der Enden des Blechstreifens und ggf. dem anschließenden Härten im wesentlichen fertiggestellt. Alternativ dazu ist vorgesehen, dass die Zähne der Verzahnung an der Schiebemuffe vor oder unter Umständen auch nach dem Härten durch Kalibrieren maßgenau zueinander ausgerichtet sind.

### Kurze Beschreibung der Zeichnungen

Die Erfindung wird nachfolgend anhand von einem Ausführungsbeispiel näher erläutert. Es zeigen:
- Figur 1: eine Schiebemuffe, bei der ein Blechstreifen mit einer Verzahnung ringförmig um eine Rotationsachse der Schiebemuffe gebogen ist, wobei die aufeinander zugebogenen Biegeenden noch nicht miteinander verbunden sind und
- Figur 2: eine Schnittdarstellung durch die Schiebemuffe nach Figur 1 entlang der Linie II-II.

### Detaillierte Beschreibung der Zeichnungen

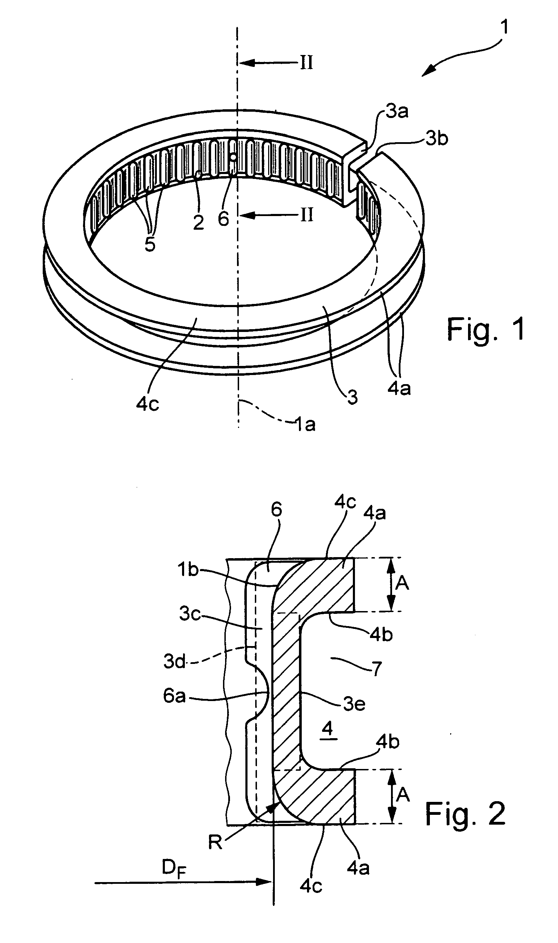

Figur 1 zeigt eine Schiebemuffe 1 mit einer Verzahnung 2 an einem Blechstreifen 3 und mit einer Schaltgabelführung 4. Die Verzahnung 2 ist mittels eines spanlosen Formgebungsprozesses in den anfangs flach mit einem rechteckigen Querschnitt vorliegenden Blechstreifen 3 eingebracht. In den gestreckt vorliegenden flachen Blechstreifen 3 ist im Anschluss an die Profilierung mit der Verzahnung 2 das U-Profil geformt. Der Blechstreifen 3 ist anschließend ringförmig um die Rotationsachse 1a der Schiebemuffe 1 gebogen. Dabei sind die Enden 3a und 3b des Blechstreifens 3 aufeinander zugebogen. Die Schiebemuffe 1 ist fertig gestellt, wenn die Enden 3a und 3b miteinander verbunden sind. In der Darstellung nach Figur 1 sind die Enden 3a und 3b jedoch noch nicht aneinandergefügt dargestellt.

Die Verzahnung 2 ist aus radial nach innen auf die Rotationsachse 1 a zuweisenden Zähnen 5 und 6 gebildet. Die Zähne 5 und 6 sind mit den üblichen Merkmalen der Verzahnung einer Schiebemuffe, wie Dachschrägen und angeschrägten Zahnflanken versehen, wobei der Zahn 6 zusätzlich eine Rastvertiefung 6a für den Eingriff eines nicht dargestellten Druckstückes einer Synchronisiereinrichtung aufweist. Die Schiebemuffe 1 mit der Schaltgabelführung 4 ist einteilig aus dem Blechstreifen 3 gebildet und weist dabei, längs der Rotationsachse 1a geschnitten (Figur 2), einen U-förmigen Querschnitt auf. Die Schaltgabelführung 4 besteht aus einer Ringnut 7 und aus zwei die Ringnut 7 seitlich begrenzenden sowie sich in Längsrichtung der Rotationsachse 1a einander gegenüberliegenden und von der Rotationsachse 1a radial nach außen hervorstehenden Borde 4a. Die Ringnut 7 ist somit seitlich durch zwei parallel zueinander ausgerichtete Flanken 4b der Borde 4a begrenzt.

Die Zähne 5 und 6 der Verzahnung 3 sowie die Borde 4a gehen von einer ringförmig um die Rotationsachse 1 a umlaufenden Basis 3c an dem Blechstreifen 3 ab. Die Basis 3c ist innen durch eine gedachte zylindrische erste Mantelfläche 3d begrenzt. Die Mantelfläche 3d weist einen Innendurchmesser auf, der dem Durchmesser D_{F} des Fußkreises der Verzahnung 2 entspricht. Außen ist die Basis 3c durch eine äußere sowie den Grund der Ringnut 7 bildende zweite Mantelfläche 3e beschrieben.

Die Borde 4a sind durch Umformen und ggf. spanabhebende Nacharbeit so ausgebildet, dass die Schiebemuffe 1 beidseitig stirnseitig jeweils eine in die Längsrichtung der Rotationsachse 1a gewandte Ringfläche 4c an den Borden 4a aufweist. Jede der Ringflächen 4c ist in der Schnittdarstellung nach Figur 2 mit einer konvex verlaufenden Körperkante 1b mit der ersten Mantelfläche 3d verbunden, wobei die Körperkante 1b in den Fußkreis der Verzahnung 2 übergeht. Die Körperkante ist mit einem Radius R beschrieben, dessen Maß mindestens genau so groß ist wie, oder größer ist als, die Dicke des rechteckigen Querschnittes an dem im Ausgangszustand flachen Blechstreifen 3.

Die Flanke 4b und die Ringfläche 4c eines jeden der Borde 4a sind parallel zueinander ausgerichtet. Der Abstand A zwischen der Flanke 4b und der Ringfläche 4c an jedem Bord 4a längs der Rotationsachse 1a entspricht einem Maß von wenigstens 9/10 der Dicke des rechteckigen Querschnitts an dem im Ausgangszustand flachen Blechstreifen 3.

### Bezugszeichen

- 1: Schiebemuffe
- 1a: Rotationsachse
- 1b: Körperkante
- 2: Verzahnung
- 3: Blechstreifen
- 3a: Ende
- 3b: Ende
- 3c: Basis
- 3d: erste Mantelfläche
- 3e: zweite Mantelfläche
- 4: Schaltgabelführung
- 4a: Bord
- 4b: Flanke
- 4c: Ringfläche
- 5: Zahn
- 6: Zahn
- 6a: Rastvertiefung
- 7: Ringnut

## Patentansprüche

1. Schiebemuffe (1) mit einer Verzahnung (2) an einem Blechstreifen (3) und mit einer Schaltgabelführung (4), wobei die Verzahnung (2) mittels eines spanlosen Formgebungsprozesses in den anfangs flach mit einem rechteckigen Querschnitt vorliegenden sowie anschließend ringförmig um eine Rotationsachse (1a) der Schiebemuffe (1) gebogenen und dabei an aufeinander zu gebogenen Enden (3a, 3b) des Blechstreifens (3) verbundenen Blechstreifen (3) eingebracht ist, so dass die Verzahnung (2) radial nach innen weisende sowie in Umfangsrichtung zueinander benachbarte Zähne (5, 6) an dem Blechstreifen (3) aufweist und wobei die Schaltgabelführung (4) mit einer außerhalb der Verzahnung (2) um die Rotationsachse (1a) verlaufenden, seitlich in beide Längsrichtungen der Rotationsachse (1a) begrenzten, sowie radial nach außen offenen Ringnut (7) versehen ist, **dadurch gekennzeichnet, dass** die Schiebemuffe (1) mit der Schaltgabelführung (4) und mit der Verzahnung (2) einteilig aus dem Blechstreifen (3) gebildet ist und dabei, längs der Rotationsachse (1a) geschnitten, einen U-förmigen Querschnitt aufweist, wobei die Ringnut (7) seitlich durch zwei sich in Längsrichtung der Rotationsachse (1 a) einander gegenüberliegende und von der Rotationsachse (1 a) radial nach außen hervorstehende Borde (4a) des ringförmig um die Rotationsachse (1a) gebogenen Blechstreifens (3) begrenzt ist.

2. Schiebemuffe nach Anspruch 1, **dadurch gekennzeichnet, dass** die Ringnut (7) seitlich durch zwei parallel zueinander ausgerichtete Flanken (4b) der Borde (4a) begrenzt ist.

3. Schiebemuffe nach Anspruch 1, **dadurch gekennzeichnet, dass** die Zähne (5, 6) der Verzahnung (2) sowie die Borde (4a) von einer ringförmig um die Rotationsachse (1a) umlaufenden Basis (3c) an dem Blechstreifen (3) abgehen, wobei eine gedachte, die Basis (3c) innen begrenzende sowie zylindrische erste Mantelfläche (3d) einen Innendurchmesser aufweist, der dem Durchmesser des Fußkreises (2) der Verzahnung entspricht und wobei die Basis (3c) außen zumindest durch eine äußere sowie die Ringnut radial innen begrenzende zweite Mantelfläche (3e) beschrieben ist.

4. Schiebemuffe nach Anspruch 3, **dadurch gekennzeichnet, dass** die Schiebemuffe (1) beidseitig stirnseitig jeweils eine in eine der Längsrichtungen der Rotationsachse (1 a) gewandte Ringfläche (4c) an den Borden (4a) aufweist.

5. Schiebemuffe nach Anspruch 4, **dadurch gekennzeichnet, dass** eine zwischen jeweils zwei benachbarten Zähnen (5, 6) der Zähne (5, 6) von der ersten Mantelfläche (3d) abgehende konvex geformte Körperkante (1b) der Schiebemuffe (1) einen Radius aufweist, wobei die Körperkante (1b) die Ringfläche (4c) mit der ersten Mantelfläche (3d) verbindet und wobei der Radius einem Maß entspricht, das mindestens genau so groß ist wie die Dicke des rechteckigen Querschnitts an dem im Ausgangszustand flachen Blechstreifen (3).

6. Schiebemuffe nach Ansprüchen 2 und 4, **dadurch gekennzeichnet, dass** die Flanke (4b) und die Ringfläche (4c) eines jeden der Borden (4a) parallel zueinander ausgerichtet sind und dass der Abstand zwischen der Flanke (4b) und der Ringfläche (4c) eines jeden der Borde (4a) längs der Rotationsachse (1 a) einem Maß von wenigstens 9/10 der Dicke des rechteckigen Querschnitts an dem im Ausgangszustand flachen Blechstreifen entspricht.

## Claims

1. Sliding sleeve (1) with a gearing (2) on a sheet metal strip (3) and with a gearshift fork guide (4), the gearing (2) being made by a shaping method without chip removal in the sheet metal strip (3) that is initially flat and has a rectangular cross-section, is then bent into an annular shape around an axis of rotation (1a) of the sliding sleeve (1) and joined at its bent-together ends (3a, 3b), so that the gearing (2) comprises radially inwards pointing and peripherally adjacent teeth (5, 6) on the sheet metal strip (3), the gearshift fork guide (4) being provided with an annular groove (7) that extends outside of the gearing (2) around the axis of rotation (1 a) while being laterally delimited in both longitudinal directions of the axis of rotation (1a) and radially open in outward direction, **characterised in that** the sliding sleeve (1) is made out of the sheet metal strip (3) in one piece with the gearshift fork guide (4) and the gearing (2) and, in a sectional view along the axis of rotation (1a), has a U-shaped cross-section, the annular groove (7) being delimited laterally by two rims (4a) of the sheet metal strip (3) that is bent into an annular shape around the axis of rotation (1a), which rims (4a) are situated opposite each other in longitudinal direction of the axis of rotation (1a) and project in radially outward direction away from the axis of rotation (1 a).

2. Sliding sleeve according to claim 1, **characterised in that** the annular groove (7) is delimited laterally by two parallel, aligned flanks (4b) of the rims (4a).

3. Sliding sleeve according to claim 1, **characterised in that** the teeth (5, 6) of the gearing (2) as also the rims (4a) start from a base (3c) on the sheet metal strip (3) extending annularly around the axis of rotation (1 a), an imaginary, cylindrical first peripheral surface (3d), that defines the base (3c) on the inside, has an inner diameter corresponding to the diameter of the root circle of the gearing (2), and the base (3c) is described on the outside at least by an outer, second peripheral surface (3e) that defines the annular groove radially on the inside.

4. Sliding sleeve according to claim 3, **characterised in that** the sliding sleeve (1) comprises on both front ends on the rims (4a), an annular surface (4c) that is oriented in one of the longitudinal directions of the axis of rotation (1 a).

5. Sliding sleeve according to daim 4, **characterised in that** a convexly shaped body edge (1 b) of the sliding sleeve (1) starting between every two adjacent teeth (5, 6) of the teeth (5, 6) from the first peripheral surface (3d) has a radius, the body edge (1 b) connects the annular surface (4c) to the first peripheral surface (3d), and the radius corresponds to a dimension that is at least exactly as large as the thickness of the rectangular cross-section on the sheet metal strip (3) that is flat in its initial state.

6. Sliding sleeve according to claims 2 and 4, **characterised in that** the flank (4b) and the annular surface (4c) of each of the rims (4a) are parallel to each other, and the distance between the flank (4b) and the annular surface (4c) of each of the rims (4a) along the axis of rotation (1 a) has a dimension corresponding to at least 9/10 of the thickness of the rectangular cross-section on the sheet metal strip that is flat in its initial state.

## Revendications

1. Manchon coulissant (1) comprenant une denture (2) sur un feuillard en tôle (3) et comprenant, en plus, un guide (4) de fourchette de changement de vitesse, la denture (2) étant réalisée par une méthode de formage sans enlèvement de copeaux dans le feuillard en tôle (3) qui est initialement plat et a une section droite rectangulaire et qui est cintré, par suite, en forme annulaire autour de l'axe de rotation (1a) du manchon coulissant (1) et est relié à ses extrémités (3a, 3b) qui sont pliées, l'une vers l'autre, de sorte que la denture (2) comprend des dents (5, 6) qui sont orientées radialement vers l'intérieur en étant adjacentes, l'une à l'autre, en direction périphérique sur le feuillard en tôle (3), et le guide (4) de fourchette de changement de vitesse étant muni d'une rainure annulaire (7) qui s'étend à l'extérieur de la denture (2) autour de l'axe de rotation (1 a), est délimitée latéralement dans les deux directions longitudinales de l'axe de rotation (1a) et est ouverte radialement vers l'extérieur, **caractérisé en ce que** le manchon coulissant (1) est formé dans le feuillard en tôle (3) en une seule pièce avec le guide (4) de changement de vitesse et la denture (2), et dans une vue en coupe le long de l'axe de rotation (1 a), le manchon coulissant (1) a une section droite en forme de U, et **en ce que** la rainure annulaire (7) est délimitée latéralement par deux bords (4a) du feuillard en tôle (3) qui est cintré en forme annulaire autour de l'axe de rotation (1a), lesdits bords (4a) étant situés vis-à-vis, l'un de l'autre, en direction longitudinale de l'axe de rotation (1a) en faisant radialement saillie vers l'extérieur par rapport à l'axe de rotation (1 a).

2. Manchon coulissant selon la revendication 1, **caractérisé en ce que** la rainure annulaire (7) est délimitée latéralement par deux flancs (4b) des bords (4a), lesdits flancs 4b) étant orientés parallèlement, l'un à l'autre.

3. Manchon coulissant selon la revendication 1, **caractérisé en ce que** les dents (5, 6) de la denture (2) ainsi que les bords (4a) s'étendent à partir d'une base (3c) sur le feuillard en tôle (3), ladite base (3c) s'étendant autour de l'axe de rotation (1a), **en ce que**, une première surface périphérique cylindrique imaginaire qui délimite la base (3c) à l'intérieur a un diamètre intérieur qui correspond au diamètre du cercle de pied de la denture (2), et **en ce que** la base (3c) est décrite à l'extérieur au moins par une seconde surface, périphérique extérieure (3e) qui délimite la rainure annulaire radialement à l'intérieur.

4. Manchon coulissant selon la revendication 3, **caractérisé en ce que** le manchon coulissant (1) comprend des deux côtés frontaux sur les bords (4a), une surface annulaire (4c) qui est orientée dans l'une des directions longitudinales de l'axe de rotation.

5. Manchon coulissant selon la revendication 4, **caractérisé en ce que**, une arête convexe (1 b) de corps du manchon coulissant (1) qui s'étend à partir r de la première surface périphérique (3d), à chaque fois, entre deux dents adjacentes (5, 6), parmi les dents (5, 6), a un rayon, **en ce que** l'arête (1 b) de corps relie la surface annulaire (4c) à la première surface périphérique (3d), et **en ce que** le rayon à une mesure qui est au moins exactement aussi grande que l'épaisseur de la section droite rectangulaire sur le feuillard en tôle (3) à son état plat initial.

6. Manchon coulissant selon les revendications 2 et 4, **caractérisé en ce que** le flanc (4b) et la surface annulaire (4c) de chacun des bords (4a) sont parallèles, l'un à l'autre, et **en ce que** l'écart entre le flanc (4b) et la surface annulaire (4c) de chacun des bords (4a) le long de l'axe de rotation (1 a) correspond à une mesure au moins de 9/10 de l'épaisseur de la section droite rectangulaire sur le feuillard en tôle à son état plat initial.
